Europäisches Patentamt

**European Patent Office**

**Office européen des brevets**

(19)

(11) Veröffentlichungsnummer: **0 210 611**
**B1**

(12) **EUROPÄISCHE PATENTSCHRIFT**

(45) Veröffentlichungstag der Patentschrift:
**13.12.89**

(51) Int. Cl.⁴: **H04J 3/16**, H04J 3/07

(21) Anmeldenummer: **86110309.1**

(22) Anmeldetag: **25.07.86**

(54) **Verfahren zum Zusammenfassen eines digitalen Bildsignals und dreier digitaler Schmalbandsignale zu einem 139 264-kbit/s-Signal.**

(30) Priorität: **31.07.85 DE 3527452**

(43) Veröffentlichungstag der Anmeldung:
**04.02.87 Patentblatt 87/6**

(45) Bekanntmachung des Hinweises auf die Patenterteilung:
**13.12.89 Patentblatt 89/50**

(84) Benannte Vertragsstaaten:
**AT BE CH DE FR GB IT LI NL SE**

(56) Entgegenhaltungen:
**DE-A- 3 213 534**
**DE-A- 3 227 780**
**DE-A- 3 229 399**
**DE-A- 3 230 271**
**DE-A- 3 249 340**

(73) Patentinhaber: **Siemens Aktiengesellschaft,**
**Wittelsbacherplatz 2, D-8000 München 2(DE)**

(72) Erfinder: **Hornung, Franz, Dipl.-Ing., Tessiner Strasse 57,**
**D-8000 München 71(DE)**
Erfinder: **Muhr, Johann, Eduard-Schmid-Strasse 4,**
**D-8000 München 90(DE)**
Erfinder: **Schalamon, Friedrich,**
**Albert-Schweltzer-Strasse 18, D-8034 Germering(DE)**

ACTORUM AG

**Beschreibung**

Die Erfindung bezieht sich auf ein Verfahren zum Zusammenfassen eines digitalen Bildsignals und dreier digitaler Schmalbandsignale zu einem 139 264-kbit/s-Signal und umgekehrt gemäß dem Oberbegriff des Patentanspruchs 1 sowie auf ein Multiplexgerät und ein Demultiplexgerät zur Durchführung dieses Verfahrens.

Aus der Deutschen Offenlegungsschrift DE 3 230 943 A1 ist ein System zur digitalen Übertragung von Video- bzw. Bildfernsprechsignalen bekannt, das mit einer Bitrate von 139 264 kbit/s arbeitet, wobei das analoge Bildsignal auf eine Bitrate von 135 000 kbit/s codiert und zusammen mit Schmalbandsignalen auf der Basis eines 64-kbit/s-Rasters mittels Synchron-Multiplexer bzw. -Demultiplexer übertragen wird. Hierzu muß ein synchrones Netz installiert sein.

Aus der deutschen Offenlegungsschrift DE 3 213 534 A1 ist weiter ein Zeitmultiplexsystem mit einer Bittaktfrequenz von 139,264 MHz für Übertragungs- und Vermittlungsaufgaben in einem integrierten digitalen Breitbandnetz bekannt. Ein Rahmen dieses Systems besteht aus 68 Spalten und 32 Zeilen, die 2176 Zeitschlitze mit je 40 bit beinhalten. Der erste Zeitschlitz enthält ein Synchronisierwort.

Nach der deutschen Offenlegungsschrift DE 3 229 399 A1 ist ein derartiger Rahmen zur Übertragung eines Bewegtbildsignals von 135,000 Mbit/s und zweier PCM30-Systeme aus 34 waagerecht angeordneten Zeilen und aus 34 senkrecht angeordneten Spalten aufgebaut. In den geradzahligen Zeitschlitzen 0,2,4,6... der 33. Spalte wird ein erstes PCM 30/1-System und in den ungeradzahligen Zeitschlitzen 1,3,5,7... dieser Spalte wird ein zweites PCM 30/2-System übertragen. Ferner wird das Rahmensynchronwort in einem aus der Differenz von 135,168 Mbit/s zu 135,000 Mbit/s freibleibendem Zeitschlitz in Spalte 0/Zeile 0 übertragen.

Eine ältere deutsche Patentanmeldung (P 3 445 355.5) betrifft bereits ein Zusammenfassen entsprechender plesiochroner Signale zu einem 139 264-kbit/s-Digitalsignal. Bei diesem Verfahren werden in einem ersten Multiplexer ein 1024-kbit/s-Signal und ein 2048-kbit/s-Signal zusammengefaßt und wird das so gebildete Zwischen-Multiplexsignal in einem zweiten Multiplexer mit einem 135015,625-kbit/s-Signal und mit einem Signal einer Bitrate 237 kbit/s gemultiplext. Der Pulsrahmen für das Zwischen-Multiplexsignal weist eine Länge von 3320 bit auf, der Pulsrahmen für das 139264-kbit/s-Signal ist in vier Abschnitte unterteilt.

Das der Zusammenfassung plesiochroner Digitalsignale dienende Positiv-Stopfverfahren ist in der Zeitschrift "telcom-report", 3(1980)4, Seiten 344-352 beschrieben. Die Bitrate 139 264 kbit/s und ein zugehöriger Pulsrahmen entstammen der CCITT-Empfehlung G.751 aus dem "CCITT Yellow Book", Vol. III, Fascicle III.3, "Digital Networks - Transmission Systems and Multiplexing Equipment", Genf, 1981, Seite 147.

Aufgabe der Erfindung ist es, ebenfalls ein Verfahren zur Zusammenfassung eines plesiochronen digitalen Bildsignals als mit plesiochronen Schmalband-Signalen anzugeben, das einfacher durchgeführt und bei dem auf einen Ausfall des Rahmenerkennungswortes schneller reagiert werden kann.

Die erfindungsgemäße Lösung erfolgt mit den im Patentanspruch 1 angegebenen Mitteln.

Die gewählte Abschnitts-Struktur hat den Vorteil, daß beim Multiplexer das Einfügen der zusätzlichen Bits in den Bild-Datenstrom in einfacher Weise mittels Schieberegister erfolgen kann. Beim Demultiplexer kann eine vorteilhafte Geschwindigkeits-Transformation zunächst auf ein Viertel und danach auf ein Zehntel der Grundrahmenfrequenz durchgeführt werden.

Ein vorteilhafte Ausgestaltung des Vielfachrahmens ist im Patentanspruch 2 angegeben. Bei der gewählten Vielfachrahmen-Struktur wird eine geringe Speichertiefe benötigt.

Vorteilhaft ist es weiter, wenn die Stopfinformation für das Bildsignal im siebzehnten, im dreiunddreißigsten und im neunundvierzigsten Abschnitt übertragen wird, und wenn der fünfundsechzigste Abschnitt für die Übertragung des stopfbaren Bits des Bildsignals vorgesehen ist. Damit sind die in den Taktzentralen erforderlichen Zählerketten einfach und kostengünstig realisierbar. Aus demselben Grund ist auch die Zahl von insgesamt 48 bit im dreiundsiebzigsten Abschnitt gegenüber den 40 bit der vorhergehenden Abschnitte zum Auffüllen des Grundrahmens günstig, weil sich 40:48 wie 10:12 verhält und übliche Zähler einsetzbar sind.

Eine größere Sicherheit gegen Fehlsynchronisation ergibt sich, wenn jedes 6-bit-Rahmenkennungswort invertiert übertragen wird.

Zur Durchführung des erfindungsgemäßen Verfahrens ist ein Multiplexgerät gemäß dem Patentanspruch 5 und ein Demultiplexgerät gemäß dem Patentanspruch 6 vorteilhaft. Mit programmierbaren Festspeichern PROM im ersten Multiplexer und/oder im zweiten Demultiplexer lassen sich die Vielfachrahmen-Takte einfach steuern.

Anhand von Ausführungsbeispielen wird die Erfindung nachstehend näher erläutert:

Figur 1 zeigt den gewählten Bildrahmen,
Figur 2 zeigt den gewählten Vielfachrahmen,
Figur 3 zeigt den Grundrahmen für das 139 264-kbit/s-Signal,
Figur 4 zeigt ein Multiplexgerät,
Figur 5 zeigt ein Demultiplexgerät und
Figur 6 zeigt einen in diesem Gerät eingesetzten Demultiplexer

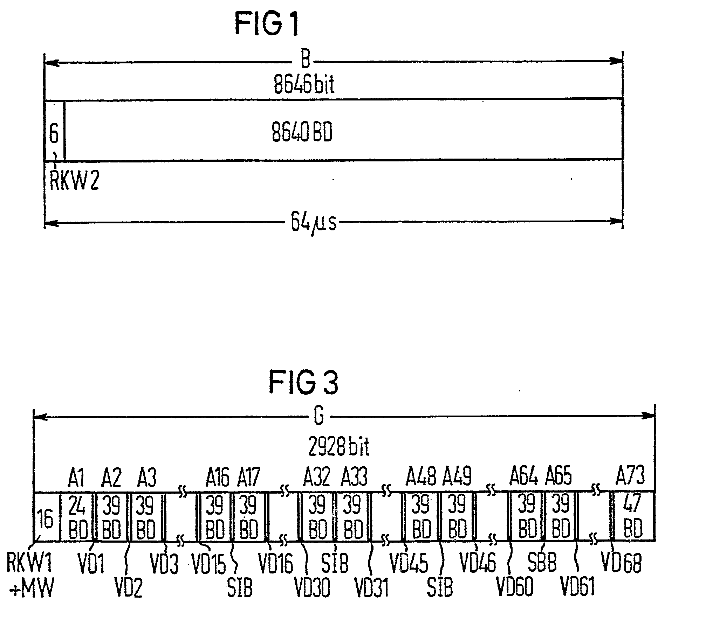

Figur 1 zeigt einen Bildrahmen B einer Länge von 8646 bit, der mit einem 6-bit-Rahmenkennungswort RKW2 beginnt, dem 8640 bit Bilddaten BD folgen.

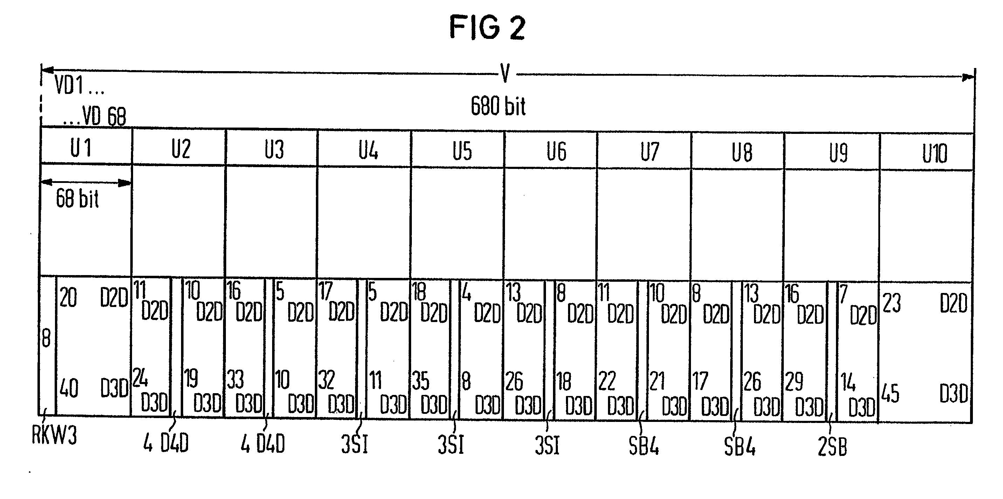

Figur 2 zeigt einen Vielfachrahmen V einer Länge von 680 bit mit 10 Unterrahmen U1 bis U10 einer Länge von jeweils 68 bit. Diese beinhalten Vielfachrahmendaten VD1 bis VD68. Mit D2D sind Daten des zweiten Digitalsignals D2a, mit D3D Daten des dritten Digitalsignals D3a, mit D4D Daten des vierten Digitalsignals D4a, mit SI die Stopfinformation für diese Digitalsignale, mit zweimal SB4 ist ein 8-bit-Stopfwort für das vierte Digitalsignal D4a und mit SB sind stopfbare Bits für das zweite und dritte Digitalsignal (D2a,D3a) bezeichnet.

Der Unterrahmen U1 enthält ein 8-bit-Rahmenkennungwort RKW3, 20 bit Daten D2D und 40 bit Daten D3D. Der Unterrahmen U 2 enthält 11+10 bit Daten D2D und 24+19 bit Daten D3D sowie 4 bit Daten D4D. Der Unterrahmen U3 enthält 16+5 bit Daten D2D und 33+10 bit Daten D3D sowie 4 bit Daten D4D. Der Unterrahmen U4 enthält 17+5 bit Daten D2D und 32+11 bit Daten D3D sowie 3 bit Stopfinformation SI. Der Unterrahmen U5 enthält 18+4 bit Daten D2D und 35+8 bit Daten D3D sowie 3 bit Stopfinformation SI. Der Unterrahmen U6 enthält 13+8 bit Daten D2D und 26+18 bit Daten D3D sowie 3 bit der Stopfinformation SI. Der Unterrahmen U7 enthält 11+10 bit Daten D2D und 22+21 bit Daten D3D sowie die erste Hälfte des stopfbaren 8-bit-Codeworts SB4. Der Unterrahmen U8 enthält 8+13 bit Daten D2D und 17+26 bit Daten D3D sowie die zweite Hälfte des stopfbaren 8-bit-Codeworts SB4. Der Unterrahmen U9 enthält 16+7 bit Daten D2D und 29+14 bit Daten D3D sowie zwei stopfbare Bits SB. Der Unterrahmen U10 enthält schließlich 23 bit Daten D2D und 45 bit Daten D3D.

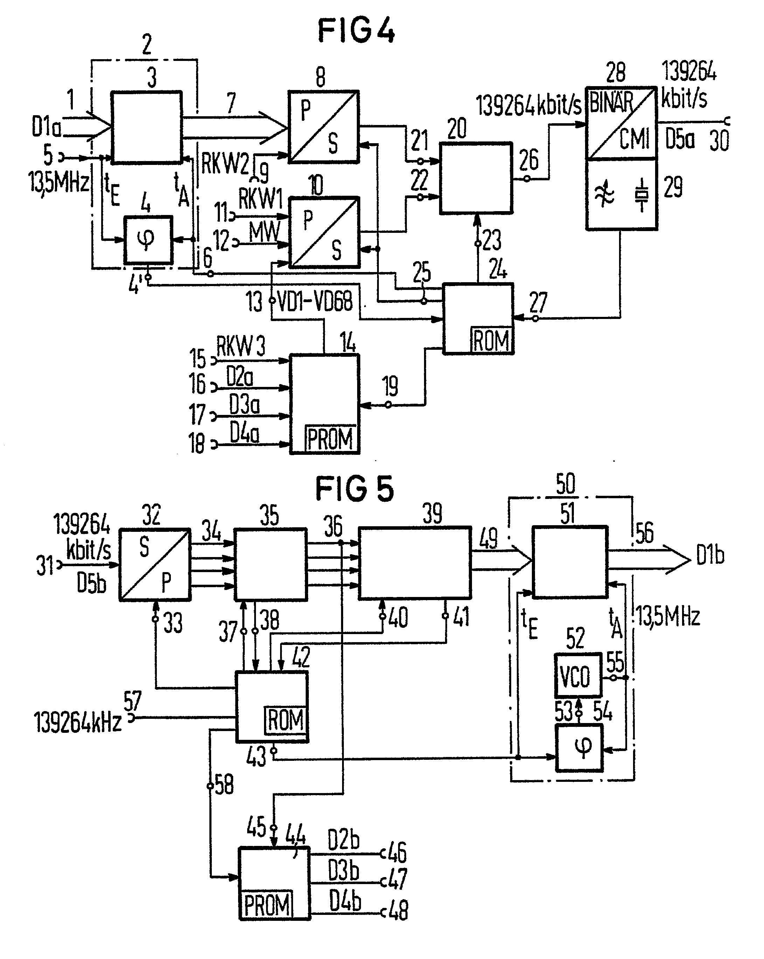

Figur 3 zeigt einen Grundrahmen G mit 2928 bit für das 139 264-kbit/s-Signal. Es enthält Abschnitte A1 bis A73, von denen die Abschnitte A1 bis A72 jeweils 40 bit enthalten und der Abschnitt A73 48 bit umfaßt. Der Abschnitt A1 enthält anfangs ein 12-bit-Rahmenkennungswort RKW1 und ein 4-bit-Meldewort MW und anschließend 24 bit Bilddaten BD. In den Abschnitten A2 bis A73 sind jeweils im ersten Zeitschlitz die Vielfachrahmendaten VD1 bis VD68, dreimal die Stopfinformation des Bildsignals SIB und einmal ein stopfbares Bit SBB des Bildsignals D1a eingefügt. In den Abschnitten A2 bis A72 sind weiter 39 bit Bilddaten BD und im Abschnitt A73 47 bit Bilddaten BD eingefügt.

Figur 4 zeigt ein erfindungsgemäßes Multiplexgerät. Es enthält einen Eingang 1 in Form eines 10-bit-Busses für das Bildsignal D1a, eine Taktanpassung 2 mit einem elastischen Speicher 3 und mit einem Phasenvergleicher 4, einen 10-bit-Bus 7, Parallel-Seriellumsetzer 8 und 10, Multiplexer 14 und 20, eine Taktzentrale 24, einen Binär/CMI-Umsetzer 28, einen Grundgenerator 29 und einen Ausang 30.

Über den Eingang 1 wird mit dem Einschreibtakt $t_E$ der Frequenz 13,5 MHz am Eingang 5 ein Bildsignal D1a eingeschrieben. Ausgelesen wird es aus dem elastischen Speicher 3 am Anschluß 6 mit dem Auslesetakt $t_A$ der von der Taktzentrale 24 geliefert wird, die wiederum vom Phasenvergleicher 4 über den Anschluß 4' Füllbit-Informationen erhält. Das im Takt angepaßte Bildsignal D1a wird zusammen mit einem 6-bit-Rahmenkennungswort RKW2 am Anschluß 9 mit dem Bildrahmen B nach Figur 1 umgesetzt und über den Anschluß 21 in den Multiplexer 20 eingegeben. Über die Anschlüsse 15 bis 18 wird ein 8-bit-Rahmenkennungswort RKW3 für den Vielfachrahmen sowie das zweite bis vierte Digitalsignal D2a bis D4a in den Multiplexer 14 eingegeben, der die Vielfachrahmendaten VD1 bis VD68 über den Anschlüß 13 in den Parallel-Seriellumsetzer 10 einspeist. In diesem werden über die Anschlüsse 11 und 12 weiter ein 12-bit-Rahmenkennungswort RKW1 und ein 4-bit-Meldewort MW des Grundrahmens G eingegeben. Das Summensignal gelangt über den Anschluß 22 zum Multiplexer 20, der an seinem Ausgang 26 das 139 264-kbit/s-Signal mit dem Grundrahmen G nach Figur 3 abgibt. Der Binär-CMI-Umsetzer 28 setzt das Signal in den CMI-Leitungscode um, der über den Ausgang 30 auf die Strecke gegeben wird.

Im Grundgenerator 29 wird ein 139 264-kHz-Takt erzeugt, der über den Anschluß 27 in die Taktzentrale 24 eingegeben wird, die ihrerseits über den Anschluß 19 den Multiplexer 14, über den Anschluß 6 die Taktanpassung 2, über den Anschluß 25 die Parallel-Seriellumsetzer 8 und 10 und über den Anschluß 23 den Multiplexer 20 steuert. Die bekannten Einrichtungen für das Stopfen sind, der Übersichtlichkeit halber, weggelassen worden.

Das Bildsignal D1a am Eingang 1 wurde nach einer Tiefpaßfilterung in einem 9-bit-A/D-Umsetzer gewonnen und in einer Fehlerschutzschaltung in 10-bit-Codewörter umgesetzt.

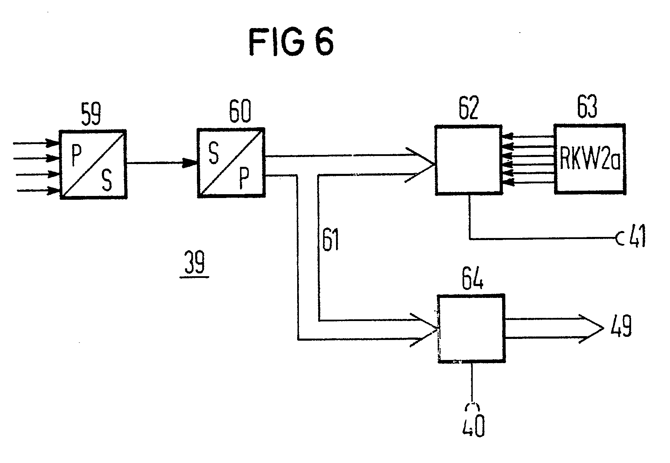

Figur 5 zeigt ein erfindungsgemäßes Demultiplexgerät. Es enthält einen Eingang 31, einen Seriell-Parallelumsetzer 32, eine 4-bit-Busverbindung 34, eine Synchronisiereinrichtung 35, die das 16-bit-Rahmenkennungswort RKW1 und das 4-bit-Meldewort MW auswertet, eine zweite 4-bit-Busverbindung 36, einen Demultiplexer 39 für das Bildsignal D1b, 10-bit-Busse 49 und 56, eine Taktanpassung 50, eine Taktversorgung 42 und einen Demultiplexer 44. Die Taktanpassung 50 enthält einen elastischen Speicher 51, einen spannungsgesteuerten Oszillator 52 und einen Phasenvergleicher 54. Ein eingangsseitig erforderlicher CMI-Binär-Umsetzer und eine Einrichtung zur Ableitung des 139264-kHz-Taktes sind nicht dargestellt.

An den Eingang 31 wird ein 139 264-kbit/s-Signal D5b angelegt, das im Seriell-Parallelumsetzer 32 in ein paralleles 4-bit-Codewort mit einer Bitrate von 34 816 kbit/s umgesetzt wird. In der Synchronisiereinrichtung 35 - einer handelsüblichen integrierten Schaltung SH 100-B-865 - wird nach erkanntem 12-bit-Rahmenkennungswort RKW1 ein Synchronisationssignal über den Anschluß 38 an die Taktzentrale 42 abgegeben. Außerdem wird das 4-bit-Meldewort MW ausgeblendet. Nach der Synchronisation wird die Position der Vielfachrahmendaten VD1 bis VD68 erhalten. Diese werden aus der ersten Stelle jedes zehnten 4-bit-Codeworts an der Verbindung 36 entnommen und dem Demultiplexer 44 mit üblichem Pufferspeicher, Destopfeinrichtung und Überwachungsschaltung zugeführt. An den Ausgängen 46 bis 48 stehen als gleichmäßige Datenströme das zweite bis vierte Digitalsignal D2b bis D4b zur Verfügung. Der Bilddatenstrom wird - wie es anhand von Figur 6 näher erläutert wird - im Demultiplexer 39 seriellparallel in 10-bit-Codewörter umgesetzt, entstopft und über den elastischen Speicher 51 gleichmäßig mit 13,5 MHz ausgelesen. Der Auslesetakt $t_A$ wird wie üblich über die Phasenvergleichsschaltung 54 mit dem Einschreibtakt $t_E$ aus einem darauf synchronisierten spannungsgesteuerten Oszillator 52 gewonnen. Die Taktversorgung 42 wird vom ankommenden 139 264-kHz-Takt am Eingang 57 gesteuert und erzeugt alle notwendigen Takte an den Anschlüssen 33, 37, 40, 43 und 58.

Die Taktanpassungen 2 und 50 sind aus Bild 7 der eingangs genannten Zeitschrift telcom report und den dort beschriebenen Geräten bekannt.

Die Mittel zur Durchführung des Stopfverfahrens wurden nicht in die Fig. 5 aufgenommen, da sie bekannt sind.

Figur 6 zeigt den Demultiplexer 39 detailliert. Er enthält einen Parallel-Seriellumsetzer 59, einen 10-bit-Bus 61, einen Komparator 62 (ECL F 100166), eine Einstelleinrichtung 63 für das Rahmenkennungswort RKW2 und zehn D-Flipflops in Form zweier hintereinander geschalteter integrierter Schaltungen (ECL F 100151). Der Parallel-Seriellumsetzer 59 kann Teil der für die Synchronisiereinrichtung 35 verwendeten integrierten Schaltung sein.

Die am Eingang des Demultiplexers 39 und damit am Eingang des Parallel-Seriellumsetzers 59 anliegenden 4-bit-Codewörter werden in letzterem in ein 139264-kbit/s-Signal umgesetzt, das im Seriell-Parallelumsetzer 60 wiederum in ständig asynchron durchlaufende 10-bit-Codewörter umgewandelt wird. Diese gelangen über den 10-bit-Bus 61 zum Komparator 62, der sie ständig mit einem Referenz-Rahmenkennungswort RKW2a vergleicht, das in der Einstelleinrichtung 63 gespeichert ist. Wird das Rahmenkennungswort RKW2 erkannt, dann wird am Ausgang 41 ein Synchronisiersignal für den Bildrahmen abgegeben. Die 10-bit-Codewörter werden über den 10-bit-Bus 61 weiterhin den zehn D-Flipflops 64 zugeführt, deren Ausgänge den Ausgang des Demultiplexers 39 bilden. Mit Hilfe des Taktes am Takteingang 40 wird das Rahmenkennungswort RKW2 dabei ausgeblendet.

## Patentansprüche

1. Verfahren zum Multiplexen eines ersten plesiochronen Digitalsignals (Bildsignal) (D1a) einer Bitrate von 135 000 kbit/s, eines zweiten plesiochronen Digitalsignals (Stereotonsignal) (D2a) einer Bitrate von 1024 kbit/s, eines dritten plesiochronen Digitalsignals (D3a) einer Bitrate von 2048 kbit/s und eines vierten plesiochronen Digitalsignals (D4a) einer Bitrate von 64 kbit/s zu einem fünften Digitalsignal (D5a) einer Bitrate von 139 264 kbit/s in einem Grundrahmen (G) einer Länge von 2928 bit beginnend mit einem 12-bit-Rahmenkennungswort (RKW1) und mit einem 4-bit-Meldewort (MW) und ferner zum Demultiplexen eines ersten bis vierten Digitalsignals (D1b - D4b) aus einem fünften Digitalsignal (D5b) insgesamt unter Anwendung eines Stopfverfahrens, dadurch gekennzeichnet,

daß sendeseitig ein Bildrahmen (B) einer Länge von 8646 bit gebildet wird, der ein 6-bit-Rahmenkennungswort (RKW2) und 8640 bit Bilddaten (BD) aufnimmt,

daß ein Vielfachrahmen (V) einer Länge von 680 bit für das zweite bis vierte Digitalsignal (D2a-D4a), unterteilt in zehn Unterrahmen (U1 - U10) einer Länge von je 68 bit, gebildet wird,

daß der erste Unterrahmen (U1) ein 8-bit-Rahmenkennungswort (RKW3) und Daten (D2D, D3D) des zweiten und dritten Digitalsignals (D2a, D3a) aufnimmt,

daß die weiteren Unterrahmen (U2 - U8) über den Vielfachrahmen (V) verteilt dreimal drei Stopfinformationsbits (SI) des zweiten bis vierten Digitalsignals (D2a - D4a), zwei stopfbare Bits (SB) des zweiten (D2a) und dritten (D3a) Digitalsignals und ein 8-bit-Stopfwort (SB4,SB4) des vierten Digitalsignals (D4a) sowie weitere Daten (D2D, D3D) des zweiten (D2a) und dritten (D3a) Digitalsignals sowie Daten (D4D) des vierten Digitalsignals (D4a) aufnehmen,

daß der Grundrahmen (G) in zweiundsiebzig Abschnitte (A1-A72) zu je 40 bit und einen weiteren Abschnitt (A73) zu 48 bit unterteilt wird,

daß der erste Abschnitt (A1) das 12-bit-Rahmenkennungswort (RKW1), das 4-bit-Meldewort (MW) und 24 bit Bilddaten (BD) aufnimmt,

daß die folgenden zweiundsiebzig Abschnitte (A2-A73) jeweils an erster Stelle 1 bit der Vielfachrahmendaten (VD1-VD68) des Vielfachrahmens (V) bzw. 1 bit der Stopfinformation (SIB) oder ein stopfbares Bit (SBB) des Bildsignals (D1) und 39 bit Bilddaten (BD) aufnehmen,

daß der letzte Abschnitt (A73) zusätzlich 8 bit Bilddaten (BD) aufnimmt und

daß empfangsseitig die ersten vier Digitalsignale (D1b - D4b) in entsprechenden Schritten wiedergewonnen werden.

2. Verfahren nach Anspruch 1, dadurch gekennzeichnet,

daß im ersten Unterrahmen (U1) neben dem 8-bit-Rahmenkennungswort (RKW3) 20 bit Daten (D2D) des zweiten Digitalsignals (D2a) und 40 bit Daten (D3D) des dritten Digitalsignals (D3a) aufgenommen werden,

daß im zweiten Unterrahmen (U2) 11 bit Daten (D2D) des zweiten Digitalsignals (D2a) und 24 bit Daten (D3D) des dritten Digitalsignals (D3a), 4 bit Daten (D4D) des vierten Digitalsignals (D4a) sowie nochmals 10 bit Daten (D2D) des zweiten Digitalsignals (D2a) und 19 bit Daten (D3D) des dritten Digitalsignals (D3a) aufgenommen werden,

daß im dritten Unterrahmen (U3) 16 bit Daten (D2D) des zweiten Digitalsignals (D2a) und 33 bit Daten (D3D) des dritten Digitalsignals (D3a), 4 bit Daten (D4D) des vierten Digitalsignals (D4a) sowie nochmals 5 bit Daten (D2D) des zweiten Digitalsignals (D2a) und 10 bit Daten (D3D) des dritten Digitalsignals (D3a) aufgenommen werden,

daß im vierten Unterrahmen (U4) 17 bit Daten (D2D) des zweiten Digitalsignals (D2a) und 32 bit Daten (D3D) des dritten Digitalsignals (D3a), 3 bit Stopfinformation (SI) des zweiten bis vierten Digitalsignals (D2a-D4a) sowie nochmals 5 bit Daten (D2D) des zweiten Digitalsignals (D2a) und 11 bit Daten (D3D) des dritten Digitalsignals (D3a) aufgenommen werden,

daß im fünften Unterrahmen (U5) 18 bit Daten (D2D) des zweiten Digitalsignals (D2a) und 35 bit Daten (D3D) des dritten Digitalsignals (D3a), 3 bit Stopfinformation (SI) des zweiten bis vierten Digitalsignals (D2a-D4a) sowie nochmals 4 Daten (D2D) des zweiten Digitalsignals (D2a) und 8 bit Daten (D3D) des dritten Digitalsignals (D3a) aufgenommen werden,

daß im sechsten Unterrahmen (U6) 13 bit Daten (D2D) des zweiten Digitalsignals (D2a) und 26 bit Daten (D3D) des dritten Digitalsignals (D3a), 3 bit Stopfinformation (SI) des zweiten bis vierten Digitalsignals (D2a-D4a) sowie nochmals 8 bit Daten (D2D) des zweiten Digitalsignals (D2a) und 18 bit Daten (D3D) des dritten Digitalsignals (D3a) aufgenommen werden,

daß im siebten Unterrahmen (U7) 11 bit Daten (D2D) des zweiten Digitalsignals (D2a) und 22 bit Daten (D3D) des dritten Digitalsignals (D3a), 4 bit einer ersten Hälfte eines 8 bit-Stopfwortes (SB4) des vierten Digitalsignals (D4a) sowie nochmals 10 bit Daten (D2D) des zweiten Digitalsignals (D2a) und 21 bit Daten (D3D) des dritten Digitalsignals (D3a) aufgenommen werden,

daß im achten Unterrahmen (U8) 8 bit Daten (D2D) des zweiten Digitalsignals (D2a) und 17 bit Daten (D3D) des dritten Digitalsignals (D3a), die zweite Hälfte des 8-bit-Stopfworts (SB4) des vierten Digitalsignals (D4a) sowie nochmals 13 bit Daten (D2D) des zweiten Digitalsignals (D2a) und 26 bit Daten (D3D) des dritten Digitalsignals (D3a) aufgenommen werden,

daß im neunten Unterrahmen (U9) 16 bit Daten (D2D) des zweiten Digitalsignals (D2a) und 29 bit Daten (D3D) des dritten Digitalsignals (D3a), zwei stopfbare Bits (SB) des zweiten (D2a) und dritten (D3a) Digitalsignals sowie nochmals 7 bit Daten (D2D) des zweiten Digitalsignals (D2a) und 14 bit Daten (D3D) des dritten Digitalsignals (D3a) aufgenommen werden und

daß im zehnten Unterrahmen (U10) 23 bit Daten (D2D) des zweiten Digitalsignals (D2a) und 45 bit Daten (D3D) des dritten Digitalsignals (D3a) aufgenommen werden.

3. Verfahren nach Anspruch 1 oder 2, dadurch gekennzeichnet,

daß die Stopfinformation (SIB) für das Bildsignal (D1a) im siebzehnten (A17), im dreiunddreißigsten (A33) und im neunundvierzigsten (A49) Abschnitt übertragen wird und daß der fünfundsechzigste Abschnitt (A65) für die Übertragung des stopfbaren Bits (SBB) des Bildsignals (D1a) vorgesehen ist.

4. Verfahren nach Anspruch 1, 2 oder 3, dadurch gekennzeichnet,

daß jedes zweite 6-bit-Rahmenkennungswort (RKW2) invertiert übertragen wird.

5. Multiplexgerät zur sendeseitigen Durchführung des Verfahrens nach einem der Ansprüche 1 bis 4 unter Verwendung von Multiplexern (14, 20), einer Multiplexgerät-Taktzentrale (24) und einer Multiplexgerät-Taktanpassung (2), dadurch gekennzeichnet,

daß die Multiplexgerät-Taktanpassung einem Bildsignaleingang (1) nachgeschaltet ist,

daß der Multiplexgerät-Taktanpassung (2) ein erster Parallel-Seriellumsetzer (8) nachgeschaltet ist, über den das 6-bit-Rahmenkennungswort (RKW2) eingespeist wird,

daß ein zweiter Parallel-Seriellumsetzer (10) vorgesehen ist, über den das 12-bit-Rahmenkennungswort (RKW1), das 4-bit-Meldewort (MW) und Daten (VD1–VD68) aus dem Vielfachrahmen (V) eingespeist werden,

daß zur Bildung des Vielfachrahmens (V) ein erster Multiplexer (14) vorgesehen ist, dem das 8-bit-Rahmenkennungswort (RKW3), das zweite (D2a), das dritte (D3a) und das vierte (D4a) Digitalsignal zugeführt wird und der die Vielfachrahmendaten (VD1–VD68) an den zweiten Parallel-Seriellumsetzer (10) abgibt,

daß ein zweiter Multiplexer (20) vorgesehen ist, dessen zwei Eingänge (21, 22) jeweils mit dem Ausgang eines Parallel-Seriellumsetzers (8, 10) verbunden sind und der das fünfte Digitalsignal (D5a) abgibt, und

daß die Multiplexgerät-Taktzentrale (24) von einem 140-Mbit/s-Grundgenerator (29) gesteuert wird, die Parallel-Seriellumsetzer (8, 10) und die Multiplexer (14, 20) steuert und von der Multiplexgerät-Taktanpassung (2) Füllbit-Informationen empfängt.

6. Demultiplexgerät zur empfangsseitigen Durchführung des Verfahrens nach einem der Ansprüche 1 bis 3 unter Verwendung von Demultiplexern (39, 44), einer Synchronisiereinrichtung (35), einer Demultiplexgerät-Taktzentrale (42) und einer Demultiplexgerät-Taktanpassung (50), dadurch gekennzeichnet,

daß eine Reihenschaltung vorgesehen ist, in die das fünfte Digitalsignal (D5b) eingangsseitig eingespeist wird, aus der das Bildsignal (D1b) ausgangsseitig entnommen wird und die aus einem Seriell-Parallelumsetzer (32), der das fünfte Digitalsignal (D5b) in 4-bit-Codewörter zerlegt, aus einer Synchronisierungeinrichtung (35), die die 4-bit-Codewörter sortiert, die bei einem erkannten 12-bit-Rahmenkennungswort (RKW3) ein Synchronisiersignal an die Multiplexgerät-Taktzentrale (42) abgibt und die das 4-bit-Meldewort (MW) ausblendet, aus einem ersten Demultiplexer (39), der ausgangsseitig 10-bit-Codewörter abgibt, und aus der Demultiplexgerät-Taktanpassung (50) gebildet ist,

daß ein zweiter Demultiplexer (44) vorgesehen ist, dessen Eingang (45) Vielfachrahmendaten (VD1–VD68) zugeführt werden und dessen Ausgänge (46–48) das zweite (D2b), das dritte (D3b) und das vierte (D4b) Digitalsignal abgeben, und daß die Demultiplexgerät-Taktzentrale (42) den Seriell-Parallelumsetzer (32), die Synchronisiereinrichtung (35), die Demultiplexer (39, 44) und die Demultiplexgerät-Taktanpassung (50) steuert.

7. Multiplex- und Demultiplexgerät nach Anspruch 5 und 6, dadurch gekennzeichnet,

daß in dem ersten Multiplexer (14) und/oder in dem zweiten Demultiplexer (44) ein nicht löschbarer oder ein löschbarer programmierbarer Festspeicher zur Steuerung vorgesehen ist.

8. Multiplex- und Demultiplexgerät nach Anspruch 7 mit nicht löschbarem programmierbarem Festspeicher (PROM), dadurch gekennzeichnet,

daß dieser steckbar und daher auswechselbar angeordnet ist.

## Revendications

1. Procédé pour le multiplexage d'un premier signal numérique plésiochrone (signal d'image) (D1a) d'un débit binaire de 135 000 kbits/sec., d'un deuxième signal numérique plésiochrone (signal de son stéréo) (D2a) d'un débit binaire de 1024 kbits/sec., d'un troisième signal numérique plésiochrone (D3a) d'un débit binaire de 2048 kbits/sec. et d'un quatrième signal numérique plésiochrone (D4a) d'un débit binaire de 64 kbits/sec. en un cinquième signal numérique (D5a) d'un débit binaire de 139 264 kbits/sec. dans un cadre de base (G) d'une longueur de 2928 bits commençant par un mot d'identification du cadre à 12 bits (RKW1) et un mot de message à 4 bits (MW) et, de plus, pour le démultiplexage d'un premier à un quatrième signal numérique (D1b à D4b) à partir d'un cinquième signal numérique (D5b), le tout en utilisant un procédé de bourrage, caractérisé en ce que, côté émission, est formé un cadre d'image (B) d'une longueur de 8646 bits qui contient un mot d'identification de cadre à 6 bits (RKW2) et des 8640 bits de données d'image (BD),

en ce qu'un cadre multiple (V) d'une longueur de 680 bits est formé pour le deuxième au quatrième signal numérique (D2a à D4a), avec subdivision en dix sous-cadres (U1 à U10) d'une longueur de chacun 68 bits;

en ce que le premier sous-cadre (U1) reçoit un mot d'identification de cadre à 8 bits (RKW3) et des données (D2D, D3D) du deuxième et du troisième signal numérique (D2a, D3a),

en ce que les autres sous-cadres (U2 à U8), avec répartition sur le cadre multiple (V), reçoivent trois fois trois bits d'information de bourrage (SI) du deuxième au quatrième signal numérique (D2a à D4a), deux bits, capable de bourrage (SB), du deuxième (D2a) et du troisième (D3a) signal numérique et un mot de bourrage à 8 bits (SB4, SB4) du quatrième signal numérique (D4a) ainsi que d'autres données (D2D, D3D) du deuxième (D2a) et troisième (D3a) signal numérique et des données (D4D) du quatrième signal numérique (D4a),

en ce que le cadre de base (G) est subdivisé en soixante douze sections (A1 à A72) de chacune 40 bits et une autre section (A73) de 48 bits, en ce que la première section (A1) contient le mot d'identification de cadre à 12 bits (RKW1), le mot de message à 4 bits (MW) et 24 bits de données d'image (BD),

en ce que les soixante douze sections suivantes (A2 à A73) contiennent chacune à la première position 1 bit des données (VD1 à VD68) du cadre multiple (V) et 1 bit des informations de bourrage (SIB) ou un bit capable de bourrage (SBB) du signal d'image (D1) et 39 bits de données d'image (BD),

en ce que la dernière section (A73) reçoit en plus 8 bits de données d'image (BD), et

en ce que, côté réception, les quatre premiers signaux numériques (D1b à D4b) sont récupérés dans les phases correspondantes.

2. Procédé suivant la revendication 1, caractérisé en ce que dans le premier sous-cadre (U1), en plus du mot d'identification de cadre à 8 bits (RKW3), sont reçus 20 bits de données (D2D) du deuxième signal numérique (D2a) et 40 bits de données (D3D) du troisième signal numérique (D3a),

en ce que dans le deuxième sous-cadre (U2) sont reçus 11 bits de données (D2D) du deuxième signal numérique (D2a) et 24 bits de données (D3D) du troisième signal numérique (D3a), 4 bits de données (D4D) du quatrième signal numérique (D4a) ainsi qu'à nouveau 10 bits de données (D2D) du deuxième signal numérique (D2a) et 19 bits de données (D3D) du troisième signal numérique (D3a),

en ce que dans le troisième sous-cadre (U3) sont reçus 16 bits de données (D2D) du deuxième signal numérique (D2a) et 33 bits de données (D3D) du troisième signal numérique (D3a), 4 bits de données (D4D) du quatrième signal numérique (D4a) ainsi qu'à nouveau 5 bits de données (D2D) du deuxième signal numérique (D2a) et 10 bits de données (D3D) du troisième signal numérique (D3a),

en ce que dans le quatrième sous-cadre (U4) sont reçus 17 bits de données (D2D) du deuxième signal numérique (D2a) et 32 bits de données (D3D) du troisième signal numérique (D3a), 3 bits d'informations de bourrage (SI) du deuxième au quatrième signal numérique (D2a à D4a) ainsi qu'à nouveau 5 bits de données (D2D) du deuxième signal numérique (D2a) et 11 bits de données (D3D) du troisième signal numérique (D3a),

en ce que dans le cinquième sous-cadre (U5) sont reçus 18 bits de données (D2D) du deuxième signal numérique (D2a) et 35 bits de données (D3D) du troisième signal numérique (D3a), 3 bits d'informations tampon (SI) du deuxième au quatrième signal numérique (D2a à D4a) ainsi qu'à nouveau 4 bits de données (D2D) du deuxième signal numérique (D2a) et 8 bits de données (D3D) du troisième signal numérique (D3a),

en ce que dans le sixième sous-cadre (U6) sont reçus 13 bits de données (D2D) du deuxième signal numérique (D2a) et 26 bits de données (D3D) du troisième signal numérique (D3a), 3 bits d'informations tampon (SI) du deuxième au quatrième signal numérique (D2a à D4a) ainsi qu'à nouveau 8 bits de données (D2D) du deuxième signal numérique (D2a) et 18 bits de données (D3D) du troisième signal numérique (D3a),

en ce que dans le septième sous-cadre (U7) sont reçus 11 bits de données (D2D) du deuxième signal numérique (D2a) et 22 bits de données (D3D) du troisième signal numérique (D3a), 4 bits d'une première moitié d'un mot de bourrage à 8 bits (SB4) du quatrième signal numérique (D4a) ainsi qu'à nouveau 10 bits de données (D2D) du deuxième signal numérique (D2a) et 21 bits de données (D3D) du troisième signal numérique (D3a),

en ce que dans le huitième sous-cadre (U8) sont reçus 8 bits de données (D2D) du deuxième signal numérique (D2a) et 17 bits de données (D3D) du troisième signal numérique (D3a), la deuxième moitié du mot de bourrage à 8 bits (SB4) du quatrième signal numérique (D4a) ainsi qu'à nouveau 13 bits de données (D2D) du deuxième signal numérique (D2a) et 26 bits de données (D3D) du troisième signal numérique (D3a),

en ce que dans le neuvième sous-cadre (U9) sont reçus 16 bits de données (D2D) du deuxième signal numérique (D2a) et 29 bits de données (D3D) du troisième signal numérique (D3a), deux bits capables de bourrage (SB) du deuxième (D2a) et troisième (D3a) signal numérique ainsi qu'à nouveau 7 bits de données (D2D) du deuxième signal numérique (D2a) et 14 bits de données (D3D) du troisième signal numérique (D3a), et

en ce que dans le dixième sous-cadre (U10) sont reçus 23 bits de données (S2D) du deuxième signal numérique (D2a) et 45 bits de données (D3D) du troisième signal numérique (D3a).

3. Procédé suivant la revendication 1 ou 2, caractérisé en ce que l'information de bourrage (SIB) pour le signal d'image (D1a) est transmise dans la dix-septième (A17), dans la trente troisième (A33) et dans la quarante-neuvième (A49) section et en ce que la soixante-cinquième section (A65) est prévue pour la transmission du bit capable de bourrage (SBB) du signal d'image (D1a).

4. Procédé suivant la revendication 1, 2 ou 3, caractérisé en ce qu'un mot d'identification de cadre à 6 bits (RKW2) sur deux est transmis inversé.

5. Appareil de multiplexage pour l'exécution, côté émission, du précédé suivant l'une des revendications 1 à 4, en utilisant des multiplexeurs (14, 20), une centrale de commande de l'appareil de multiplexage (24) et un système d'adaptation de la commande de l'appareil de multiplexage (2), caractérisé en ce que le système d'adaptation de la commande de l'appareil de multiplexage est monté à la suite d'une entrée (1) du signal d'image,

en ce qu'à la suite du système d'adaptation de la commande de l'appareil de multiplexage (2) est monté un premier convertisseur parallèle-série (8) par l'intermédiaire duquel le mot d'identification de cadre à 6 bits (RKW2) est mémorisé, en ce qu'il est prévu un deuxième convertisseur parallèle-série (10) par l'intermédiaire duquel le mot d'identification de cadre à 12 bits (RKW1), le mot de message à 4 bits (MW) et des données (VD1 à VD68) provenant du cadre multiple (V) sont mémorisés,

en ce que, pour constituer le cadre multiple (V), est prévu un premier multiplexeur (14) auquel sont transmis le mot d'identification de cadre à 8 bits (RKW3), le deuxième (D2a), le troisième (D3a) et le quatrième (D4a) signal numérique, et qui envoie les données du cadre multiple (VD1 à VD68) au deuxième convertisseur parallèle-série (10), en ce qu'il est prévu un deuxième multiplexeur (20), dont les deux entrées (21, 22) sont reliées avec la sortie d'un convertisseur parallèle-série (8, 10) et qui émet le cinquième signal numérique (D5a), et

en ce que la centrale de cadence de l'appareil de multiplexage (24) est commandée par un générateur de base (29) de 140 Mbits/sec., qui commande les convertisseurs parallèle-série (8, 10) et les multiplexeurs (14, 20) et reçoit du système d'adaptation de la commande de l'appareil de multiplexage (2) des informations à bits de remplissage.

6. Appareil de démultiplexage pour l'exécution, côté réception, du procédé suivant l'une des revendications 1 à 3, en utilisant des démultiplexeurs (39, 44), un dispositif de synchronisation (35), une centrale de cadence de l'appareil de démultiplexage (42) et un système d'adaptation de la commande de l'appareil de démultiplexage (50), caractérisé en ce qu'il est prévu un montage en série, dans lequel le cinquième signal numérique (D5b) est mémorisé côté entrée, sur lequel le signal d'image (D1b) est prélevé côté sortie, et qui est constitué d'un convertisseur série-parallèle (32) qui décompose le cinquième signal numérique (D5b) en mots de code à 4 bits, d'un dispositif de synchronisation (35) qui trie les mots de code à 4 bits, qui, lorsqu'un mot d'identification de cadre à 12 bits (RKW3) est reconnu, envoie un signal de synchronisation à la centrale de cadence de l'appareil de multiplexage (42) et qui filtre le mot de message à 4 bits (MW), d'un premier démultiplexeur (39) qui émet, côté sortie, des mots de code à 10 bits, et du système d'adaptation de la commande de l'appareil de démultiplexage (50),

en ce qu'il est prévu un deuxième démultiplexeur (44), à l'entrée (45) duquel sont transmises les données du cadre multiple (VD1 à VD68) et dont les sorties (46 à 48) émettent le deuxième (D2b), le troisième (D3b) et le quatrième (D4b) signal numérique,

et en ce que la centrale de commande de l'appareil de démultiplexage (42) commande le convertisseur série-parallèle (32), le dispositif de synchronisation (35), les démultiplexeurs (39, 44) et le système d'adaptation de la cadence de l'appareil de démultiplexage (50).

7. Appareil de multiplexage et de démultiplexage suivant les revendications 5 et 6, caractérisé en ce qu'il est prévu dans le premier multiplexeur (14) et/ou dans le deuxième démultiplexeur (44) une mémoire fixe programmable non effaçable ou effaçable pour la commande.

8. Appareil de multiplexage et de démultiplexage suivant la revendication 7 avec mémoire fixe programmable non effaçable (PROM), caractérisé en ce que cette mémoire est agencée enfichable et donc amovible.

**Claims**

1. Method for multiplexing a first plesiochronous digital signal (picture signal) (D1a) with a bit rate of 135 000 kbit/s, a second plesiochronous digital signal (stereo audio signal) (D2a) with a bit rate of 1024 kbit/s, a third plesiochronous digital signal (D3a) with a bit rate of 2048 kbit/s and a fourth plesiochronous digital signal (D4a) with a bit rate of 64 kbit/s to form a fifth digital signal (D5a) with a bit rate of 139 264 kbit/s in a basic frame (G) with a length of 2928 bits beginning with a 12-bit frame alignment word (RKW1) and with a 4-bit signalling word (MW) and furthermore for demultiplexing a first to fourth digital signal (D1b–D4b) from a fifth digital signal (D5b) overall by using a stuffing process, characterized in that on the transmitting side a picture frame (B) with a length of 8646 bits is formed which accommodates a 6-bit frame alignment word (RKW2) and 8640 bits of picture data (BD), that a multiple frame (V) with a length of 680 bits for the second to fourth digital signal (D2a–D4a), subdivided into ten subframes (U1–U10) with a length of 68 bits each, is formed, that the first subframe (U1) accommodates an 8-bit frame alignment word (RKW3) and data (D2D, D3D) of the second and third digital signal (D2a, D3a), that the further subframes (U2–U8) accommodate, divided over the multiple frame (V), three times three stuffing information bits (SI) of the second to fourth digital signal (D2a–D4a), two stuffable bits (SB) of the second (D2a) and third (D3a) digital signal and an 8-bit stuffing word (SB4, SB4) of the fourth digital signal (D4a) and further data (D2D, D3D) of the second (D2a) and third (D3a) digital signal and data (D4D) of the fourth digital signal (D4a), that the basic frame (G) is subdivided into seventy-two sections (A1–A72) of 40 bits each and a further section (A73) of 48 bits, that the first section (A1) accommodates the 12-bit frame alignment word (RKW1), the 4-bit signalling word (MW) and 24 bits of picture data (BD), that the next seventy-two sections (A2–A73) in each case accommodate in the first location 1 bit of the multiple frame data (VD1–VD68) of the multiple frame (V) and 1 bit of the stuffing information (SIB) or a stuffable bit (SBB) of the picture signal (D1) and 39 bits of picture data (BD), that the last section (A73) additionally accommodates 8 bits of picture data (BD) and that the first four digital signals (D1b–D4b) are recovered in corresponding steps on the receiving side.

2. Method according to Claim 1, characterized in that, in addition to the 8-bit frame alignment word (RKW3), 20 bits of data (D2D) of the second digital signal (D2a) and 40 bits of data (D3D) of the third digital signal (D3a) are accommodated in the first subframe (U1), that 11 bits of data (D2D) of the second digital signal (D2a) and 24 bits of data (D3D) of the third digital signal (D3a), 4 bits of data (D4D) of the fourth digital signal (D4a) and again 10 bits of data (D2D) of the second digital signal (D2a) and 19 bits of data (D3D) of the third digital signal (D3a) are accommodated in the second subframe (U2), that 16 bits of data (D2D) of the second digital signal (D2a) and 33 bits of data (D3D) of the third digital signal (D3a), 4 bits of data (D4D) of the fourth digital signal (D4a) and again 5 bits of data (D2D) of the second digital signal (D2a) and 10 bits of data (D3D) of the third digital signal (D3a) are accommodated in the third subframe (U3), that 17 bits of data (D2D) of the second digital signal (D2a) and 32 bits of data (D3D) of the third digital signal (D3a), 3 bits of stuffing information (SI) of the second to fourth digital signal (D2a–D4a) and again 5 bits of data (D2D) of the second digital signal (D2a) and 11 bits of data (D3D) of the third digital signal (D3a) are accommodated in the fourth subframe (U4), that 18 bits of data (D2D) of the second digital signal (D2a) and 35 bits of data (D3D) of the third digital signal (D3a), 3 bits of stuffing information (SI) of the second to fourth digital signal (D2a–D4a) and again 4 bits of data (D2D) of the second digital signal (D2a) and 8 bits of data (D3D) of the third digital signal (D3a) are accommodated in the fifth subframe (U5), that 13 bits of data (D2D) of the second digital signal (D2a) and 26 bits of data (D3D) of the third digital signal (D3a), 3 bits of stuffing information (SI) of the second to fourth digital signal (D2a–D4a) and again 8 bits of data (D2D) of the second digital signal (D2a) and 18 bits of data (D3D) of the third digital signal (D3a) are accommodated in the sixth subframe (U6), that 11 bits of data (D2D) of the second digital signal (D2a) and 22 bits of data (D3D) of the third digital signal (D3a), 4 bits of a first half of an 8-bit stuffing word (SB4) of the fourth digital signal (D4a) and again 10 bits of data (D2D) of the second digital signal (D2a) and 21 bits of data (D3D) of the third digital signal (D3a) are accommodated in the seventh subframe (U7), that 8 bits of data (D2D) of the second digital signal (D2a) and 17 bits of data (D3D) of the third digital signal (D3a), the second half of the 8-bit stuffing word (SB4) of the fourth digital signal (D4a) and again 13 bits of data (D2D) of the second digital signal (D2a) and 26 bits of data (D3D) of the third digital signal (D3a) are accommodated in the eigth subframe (U8), that 16 bits of data (D2D) of the second digital signal (D2a) and 29 bits of data (D3D) of the third digital signal (D3a), 2 stuffable bits (SB) of the second (D2a) and third (D3a) digital signal and again 7 bits of data (D2D) of the second digital signal (D2a) and 14 bits of data (D3D) of the third digital signal (D3a) are accommodated in the ninth subframe (U9), and that 23 bits of data (D2D) of the second digital signal (D2a) and 45 bits of data (D3D) of the third digital signal (D3a) are accommodated in the tenth subframe (U10).

3. Method according to Claim 1 or 2, characterized in that the stuffing information (SIB) for the picture signal (D1a) is transmitted in the seventeenth (A17), in the thirty-third (A33) and in the forty-ninth (A49) section and that the sixty-fifth section (A65) is provided for transmitting the stuffable bits (SBB) of the picture signal (D1a).

4. Method according to Claim 1, 2 or 3, characterized in that every second 6-bit frame alignment word (RKW2) is transmitted inverted.

5. Multiplexing device for carrying out the method according to one of Claims 1 to 4 on the transmitting side, using multiplexers (14, 20), a multiplexing device master clock (24) and a multiplexing device clock rate adaptor (2), characterized in that the multiplexing device clock rate adaptor follows a picture signal input (1), that the multiplexing device clock rate adaptor (2) is followed by a first parallel/serial converter (8) via which the 6-bit frame alignment word (RKW2) is fed in, that a second parallel/serial converter (10) is provided via which the 12-bit frame alignment word (RKW1), the 4-bit signalling word (MW) and data (VD1–VD68) from the multiple frame (V) are fed in, that, for the purpose of forming the multiple frame (V), a first multiplexer (14) is provided which is supplied with the 8-bit frame alignment word (RKW3), the second (D2a), the third (D3a) and the fourth (D4a) digital signal and which delivers the multiple-frame data (VD1–VD68) to the second parallel/serial converter (10), that a second multiplexer (20) is provided, the two inputs (21, 22) of which are in each case connected to the output of a parallel/serial converter (8, 10) and which delivers the fifth digital signal (D5a), and that the multiplexing device master clock (24) is controlled by a basic 140-Mbit/s generator (29) which controls the parallel/serial converters (8, 10) and the multiplexers (14, 20) and receives justification-bit information items from the multiplexing device clock rate adaptor (2).

6. Demultiplexing device for carrying out the method according to one of Claims 1 to 3 on the receiving side, using demultiplexers (39, 44), a synchronizing device (35), a demultiplexing device master clock (42) and a demultiplexing device clock rate adaptor (50), characterized in that a series circuit is provided into which the fifth digital signal (D5b) is fed at the input, from which the picture signal (D1b) is taken at the output side, and which is formed of a serial/parallel converter (32) which splits the fifth digital signal (D5b) into 4-bit code words, of a synchronizing device (35) which sorts the 4-bit code words, which delivers a synchronizing signal to the multiplexing device master clock (42) when a 12-bit frame alignment word (RKW3) has been detected and which takes out the 4-bit signalling word (MW), of a first multiplexer (39) which delivers 10-bit code words at the output side, and of the demultiplexing device clock rate adaptor (50), that a second demultiplexer (44) is provided, the input (45) of which is supplied with multiple-frame data (VD1–VD68) and the outputs of which (46–48) deliver the second (D2b), the third (D3b) and the fourth (D4b) digital signal, and that the demultiplexing device master clock (42) controls the serial/parallel converter (32), the synchronizing device (35), the demultiplexers (39, 44) and the demultiplexing device clock rate adaptor (50).

7. Multiplexing and demultiplexing device according to Claim 5 and 6, characterized in that a non-erasable or an erasable programmable read-only memory is provided for control purposes in the first multiplexer (14) and/or in the second demultiplexer (44).

8. Multiplexing and demultiplexing device according to Claim 7, comprising a non-erasable programmable read-only memory (PROM), characterized in that the latter is arranged to be pluggable and thus interchangeable.

# FIG 1

B
8646 bit

6
RKW 2

8640 BD

64 µs

# FIG 3

G
2928 bit

| A1 | A2 | A3 | | A16 | A17 | | A32 | A33 | | A48 | A49 | | A64 | A65 | | A73 |

| 16 | 24 BD | 39 BD | 39 BD | | 39 BD | 39 BD | | 39 BD | 39 BD | | 39 BD | 39 BD | | 39 BD | 39 BD | | 47 BD |

RKW1 +MW  VD1  VD2  VD3  VD15  SIB  VD16  SIB  VD30  SIB  VD31  VD45  SIB  VD46  VD60  SBB  VD61  VD68

# FIG 2

EP 0 210 611 B1

VD1 ...
...VD 68

V — 680 bit

| U1 | U2 | U3 | U4 | U5 | U6 | U7 | U8 | U9 | U10 |
|----|----|----|----|----|----|----|----|----|-----|

68 bit

| 20 | D2D | 11 D2D | 10 D2D | 16 D2D | 5 D2D | 17 D2D | 5 D2D | 18 D2D | 4 D2D | 13 D2D | 8 D2D | 11 D2D | 10 D2D | 8 D2D | 13 D2D | 16 D2D | 7 D2D | 23 | D2D |

8

| 40 | D3D | 24 D3D | 19 D3D | 33 D3D | 10 D3D | 32 D3D | 11 D3D | 35 D3D | 8 D3D | 26 D3D | 18 D3D | 22 D3D | 21 D3D | 17 D3D | 26 D3D | 29 D3D | 14 D3D | 45 | D3D |

RKW3      4 D4D      4 D4D      3SI      3SI      3SI      SB4      SB4      2SB

# FIG 4

# FIG 5

# FIG 6